# EUROPÄISCHE PATENTSCHRIFT

(11) **EP 0 648 981 B1**
(45) Veröffentlichungstag und Bekanntmachung des Hinweises auf die Patenterteilung: **11.06.1997**
(21) Anmeldenummer: 94116113.5
(22) Anmeldetag: 12.10.1994
(51) Int. Cl.: F24D 11/00

(54) **Multivalente Heizungsanlage**
Multivalent heating installation
Installation de chauffage polyvalente

(30) Priorität: 16.10.1993 DE 9315785 U
(43) Veröffentlichungstag der Anmeldung: 19.04.1995
(73) Patentinhaber: Binkert, Hugo, D-79774 Albbruck-Birndorf (DE); Bauer, Josef, D-85716 Unterschleissheim-Hollern (DE)
(72) Erfinder: Binkert, Hugo, D-79774 Albbruck-Birndorf (DE); Bauer, Josef, D-85716 Unterschleissheim-Hollern (DE)
(74) Vertreter: Albrecht, Ralf, Dipl.-Ing.

(56) Entgegenhaltungen:
- DE-A- 2 757 961
- DE-A- 2 820 748
- FR-A- 2 452 675
- NL-A- 9 101 501
- US-A- 4 175 698

## Beschreibung

Die Erfindung betrifft eine multivalente Heizungsanlage nach dem Oberbegriff von Anspruch 1.

Moderne Heizungsanlagen sind oftmals mit Wärmespeichern ausgerüstet, um Leistungsschwankungen von Wärmequellen ausgleichen zu können oder die Möglichkeit zu bieten, die Betriebszeiten von Wärmequellen zu optimieren. Im übrigen ermöglicht es ein Wärmespeicher in vergleichsweise einfacher Weise, die Wärme unterschiedlicher Energiequellen zu nutzen.

Allerdings besteht eine gewisse Schwierigkeit darin, auch solche Wärmequellen einzusetzen, welche in der Regel nur Wärme mit niedriger Temperatur erzeugen. Dies gilt insbesondere dann, wenn die Heizkörper bzw. das erwärmte Trinkwasser eine höhere Temperatur als die letztgenannten Wärmequellen aufweisen sollen.

Eine Heizungsanlage der eingangs genannten Art ist aus der Druckschrift DE-OS 28 20 748 bekannt. Bei dieser Heizungsanlage sind die Durchflußwärmetauscher jeweils als Boiler ausgebildet, in denen relativ große Mengen an Trinkwasser auf einer vorgegebenen Temperatur gehalten werden. Hierdurch wird zwar gewährleistet, daß bei Bedarf, etwa zum Duschen, ausreichende Mengen an heißem Trinkwasser zur Verfügung stehen, jedoch ist der Energiebedarf, der erforderlich ist, um diese Temperatur in den Boilern über einen längeren Zeitraum zu halten, relativ groß.

Wenn längere Zeit kein Trinkwasser benötigt wird, kann es außerdem zu einer Bakterienbildung in dem Trinkwasser, das sich in dem Boiler befindet, kommen, was aus hygienischen Gründen unerwünscht ist.

Der Erfindung liegt die Aufgabe zugrunde, eine Heizungsanlage der eingangs genannten Art so auszubilden, daß kurzfristig große Mengen an frischem, heißem Trinkwasser zur Verfügung gestellt werden können.

Diese Aufgabe wird durch die im Anspruch 1 angegebenen Merkmale gelöst.

Bei der erfindungsgemäßen Heizungsanlage wird im Betrieb durch die zwischen den unteren und oberen Durchflußwärmetauschern angeordnete starke Wärmequelle Wasser erhitzt. Das erhitzte Wasser steigt dann innerhalb des einen Schachtes auf und strömt von der oberen Öffnung des Schachtes seitwärts über die im Verbindungsbereich zu den weiteren Schächten vorgesehenen oberen Wärmetauscher, wodurch dann kurzfristig auch große Trinkwassermengen in den Wärmetauschern erhitzt werden können.

Aufgrund von Temperaturdifferenzen bildet sich im Wasser des Wärmespeichers beim Betrieb der Brennkammer eine Konvektionsströmung, d. h. das aus dem Schacht aufsteigende Wasser bzw. Medium sinkt in den angrenzenden Schächten nach unten und gelangt dann wieder an der Brennkammer vorbei durch den Schacht nach oben.

Die Abwärtsströmung in den Schächten ist besonders stark, wenn erhitztes Trinkwasser aus den Wärmetauschern abgezapft wird, weil dann aus dem Wasser des Speichers große Wärmemengen zum Aufheizen des in die Wärmetauscher nachströmenden kälteren Trinkwassers aus dem Boiler entnommen werden kann und dementsprechend das an den Wärmetauschern vorbeiströmende Speicherwasser stärker abgekühlt wird.

Durch die erfindungsgemäße Ausbildung ist es somit nicht erforderlich, große Mengen an Trinkwasser auf einer hohen Temperatur zu halten, sondern die Trinkwassermengen können durch die erfindungsgemäße Ausbildung auch kurzfristig bereitsgestellt werden.

Damit kann das Fassungsvermögen der Durchflußwärmetauscher gering gehalten werden, so daß das Trinkwasser in den Durchflußwärmetauschern eine vergleichsweise geringe Verweilzeit hat, so daß die Gefahr einer Bakterienbildung in dem Trinkwasser vermindert ist.

Mit der erfindungsgemäßen Anlage können somit immer große Mengen an warmem und frischem Trinkwasser bereitgestellt werden.

Die Erfindung beruht auf dem allgemeinen Gedanken, die sich in einem Wärmespeicher mit Wasserfüllung ausbildende Temperaturschichtung, die dazu führt, daß im unteren Bereich des Wärmespeichers Wasser mit geringerer Temperatur als im oberen Bereich des Wärmespeichers vorliegt, sowohl bei der Einleitung der Wärme von den unterschiedlichen Wärmequellen als auch bei der Ausnutzung der Wärme zu Heizzwecken sowie zur Trinkwassererwärmung zu berücksichtigen.

Durch die Anordnung des unteren Durchflußwärmetauschers bzw. Boilers zur Vorwärmung des Trinkwassers wird ein besonders ausgeprägter Temperaturgradient im Wärmespeicher erreicht, d.h. die Temperaturdifferenz zwischen der höheren Temperatur des Speicherwassers im oberen Bereich des Speichers und der geringeren Temperatur des Speicherwassers im unteren Bereich des Speichers kann relativ große Werte haben. Dadurch wird sicher gewährleistet, daß die Wärme von Niedertemperatur-Wärmequellen, deren Wärme in den unteren Bereich des Wärmespeichers eingeleitet wird, zumindest zur Vorwärmung des mit sehr geringer Temperatur aus dem öffentlichen Trinkwassernetz in den unteren Durchflußwärmertauscher bzw. Boiler eingeleiteten Trinkwassers genutzt werden kann.

Auf diese Weise besteht die Möglichkeit, im Bereich des unteren Durchflußwärmetauschers bzw. Boilers mit geringer Temperatur in den Speicher eingeleitete Wärme zu einer mehr oder weniger starken Vorwärmung des Trinkwassers auszunutzen. Da das von der öffentlichen Trinkwasserversorgung kommende Trinkwasser typischerweise eine sehr niedrige Temperatur hat, können also zu diesem Zweck mit sehr geringer Temperatur arbeitende Wärmequellen genutzt werden.

Damit wird auch der Gesamtwirkungsgrad der Heizungsanlage erhöht, welcher um so größer sein kann, je niedriger die Mindesttemperatur ist, bei der noch Wärme wirksam nutzbar ist.

Ein besonderer Vorzug der Erfindung liegt darin, daß durch Ausnutzung der vergleichsweise stabilen Temperaturschichtung des Speicherwassers sowie die je nach Temperatur der jeweiligen Wärmequelle in unterschiedlicher Höhe erfolgende Einleitung der Wärme in den Speicher ohne aufwendige zusätzliche Maßnahmen praktisch vollständig vermieden wird, daß in größerer Höhe des Speichers eingeleitete Wärme mit höherer Temperatur tieferliegende Wasserschichten des Speichers mit geringerer Temperatur erwärmt. Vielmehr gibt jede Wärmequelle ihre Wärme im wesentlichen nur an die über der jeweiligen Ebene der Wärmeeinleitung liegenden Wasserschichten des Speichers ab.

Im übrigen wird hinsichtlich bevorzugter Merkmale der Erfindung auf die Ansprüche sowie die nachfolgende Beschreibung bevorzugter Ausführungsformen verwiesen, welche anhand der Zeichnung erläutert werden.

Dabei zeigt
- Fig. 1: ein schaltplanartig schematisiertes Schnittbild einer erfindungsgemäßen Heizungsanlage und
- Fig. 2: ein Schnittbild einer abgewandelten - besonders bevorzugten - Ausführungsform.

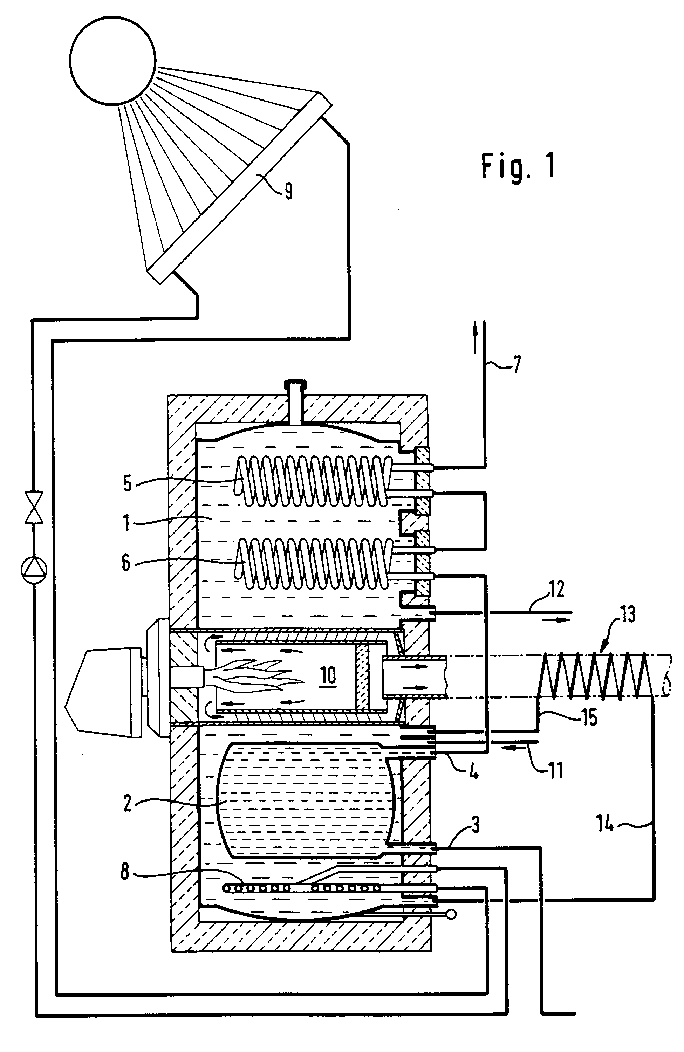

Ein zentraler, mit Wasser gefüllter Wärmespeicher 1 besitzt gemäß Fig. 1 eine im Vergleich zu seinem Grundriß relativ große Höhe, um eine vergleichsweise stabile Temperaturschichtung des Wassers im Wärmespeicher 1 gewährleisten zu können, derart, daß zwischen kälterem Wasser im unteren Teil des Wärmespeichers 1 und wärmerem Wasser im oberen Teil des Wärmespeichers 1 nur ein geringer Wärmeaustausch stattfinden kann, solange in den Wärmespeicher 1 keine zusätzliche Wärme eingeleitet wird. Innerhalb der Wasserfüllung des Wärmespeichers 1 ist in dessen unterem Bereich ein Trinkwasserboiler 2 angeordnet, dessen Innenraum in wärmeleitender Verbindung mit der den Boiler 2 umschließenden Wasserfüllung des Wärmespeichers 1 steht. Der Trinkwasserboiler 2 besitzt einen unteren, mit einem Trinkwasserversorgungsnetz verbindbaren Einlaß 3 sowie einen oberen Auslaß 4, der seinerseits über im oberen Teil des Wärmespeichers 1 angeordnete Durchflußwärmetauscher 5 und 6 mit einer Leitung 7 für warmes Trinkwasser verbunden ist.

Unterhalb des Trinkwasserboilers 2 ist innerhalb der Wasserfüllung des Wärmespeichers 1 ein flacher Wärmetauscher 8 angeordnet, der im dargestellten Beispiel mit einem Solarkollektor 9 verbunden ist und dementsprechend durch Sonneneinstrahlung erzeugte Wärme in die Wasserfüllung des Wärmespeichers 1 einzuspeisen gestattet.

Vertikal zwischen dem Trinkwasserboiler 2 und den Wärmetauschern 5 und 6 ist eine Brennkammer 10 einer Öl- oder Gasheizung od.dgl. angeordnet, um gegebenenfalls das Speicherwasser des Wärmespeichers 1 zusätzlich aufheizen zu können.

Unterhalb der Brennkammer 10 bzw. dicht oberhalb des Trinkwasserboilers 2 ist am Wärmespeicher 1 eine Rücklaufleitung 11 einer Warmwasserheizung angeschlossen, deren Vorlaufleitung 12 oberhalb der Brennkammer 10, jedoch unterhalb der Wärmetauscher 5 bzw. 6 angeschlossen ist.

Beim Betrieb der Heizungsanlage wird sich im Speicherwasser des Wärmespeichers 1 ein Temperaturgradient einstellen, derart, daß die Temperatur im Speicherwasser von unten nach oben ansteigt.

Da bei Abnahme von warmem Trinkwasser aus der Leitung 7 kaltes Trinkwasser aus der Trinkwasserversorgung über den Einlaß 3 in den Trinkwasserboiler 2 einströmt, hat der Trinkwasserboiler 2 immer eine besonders niedrige Temperatur, die es ermöglicht, daß auch bei mäßiger Temperatur des den Trinkwasserboiler 2 umgebenden Speicherwassers ein wirksamer Wärmefluß aus dem Speicherwasser in das Trinkwasser des Boilers 2 auftritt. Dementsprechend kann also das Trinkwasser im Boiler 2 immer durch das umgebende Speicherwasser vorgewärmt werden.

Dies ist gleichbedeutend damit, daß bereits bei geringer Sonneneinstrahlung auf den Solarkollektor 9 über den damit verbundenen Wärmetauscher 8 Wärme bei vergleichsweise geringer Temperatur wirksam in das Speicherwasser in der Umgebung des Boilers 2 und damit in das darin befindliche Trinkwasser eingeleitet werden kann.

Sollte die Sonneneinstrahlung auf den Solarkollektor 9 hinreichend groß sein, so kann der Wärmetauscher 8 gegebenenfalls das gesamte Speicherwasser des Wärmespeichers 1 vergleichsweise stark erwärmen, so daß das Temperaturniveau ausreicht, daß das Trinkwasser auf dem Wege vom Einlaß 3 zur Leitung 7 eine gewünschte Temperatur erreicht.

Darüber hinaus kann die Wärmezufuhr über den Wärmetauscher 8 auch genügend stark sein, um den Wärmebedarf der zwischen Vor- und Rücklaufleitung 11 und 12 angeschlossenen Heizung zu decken.

Bei kleiner Fläche des Solarkollektors 9 bzw. bei geringer Sonneneinstrahlung wird dies nicht der Fall sein, d.h. die vom Wärmetauscher 8 in das Speicherwasser eingeführten Wärmemengen sind vergleichsweise gering und fallen darüber hinaus bei mäßiger Temperatur an, so daß lediglich eine schwache Vorheizung des Trinkwassers im Trinkwasserboiler 2 erfolgen kann.

In diesem Falle kann das Speicherwasser im Wärmespeicher 1 oberhalb der Brennkammer 10 durch den darin erfolgenden Verbrennungsprozeß erwärmt werden, um einerseits das Trinkwasser über die Wärmetauscher 5 und 6 in gewünschter Weise aufzuheizen und andererseits auch über die Vorlaufleitung 12 den daran angeschlossenen Heizungen genügend Wärme zuführen zu können.

Bei dieser Betriebsweise wird die relativ stabile Temperaturschichtung des Speicherwassers im Wärmespeicher 1 ausgenutzt, indem die Wärme der Brennkammer 10 im wesentlichen nur in das Speicherwasser oberhalb des Boilers 2 eingeleitet wird, während das darunter befindliche Speicherwasser in erster Linie nur die bei geringer Temperatur anfallende Wärme des Wärmetauschers 8 aufnimmt.

Gegebenenfalls kann der Wärmeinhalt der aus der Brennkammer 10 austretenden Brandgase, welche eine vergleichsweise geringe Temperatur haben können, wenn die Verbrennungswärme weitgehend vollständig in das Speicherwasser eingeleitet wird, mittels eines zusätzlichen Wärmetauschers 13 ausgenutzt werden, welcher über eine Einlaßleitung 14 sowie eine Auslaßleitung 15 mit dem Speicherwasser des Wärmespeichers 1 kommuniziert. Auch wenn die Brandgase im Wärmetauscher 13 nur eine geringe Temperatur haben, ist noch eine wirksame Wärmeeinleitung in das Speicherwasser möglich. Durch das vergleichsweise kalte Trinkwasser, welches über den Einlaß 3 in den Trinkwasserboiler 2 einströmt, haben die unteren Schichten des Speicherwassers in Höhe der Einlaßleitung 14 ebenfalls eine sehr geringe Temperatur, die typischerweise noch unterhalb der Abgastemperatur im Wärmetauscher 13 liegt. Somit wird im Ergebnis über die Auslaßleitung 15 des Wärmetauschers 13 Wärme in den Speicher 1 eingeführt. Diese Wärme kann dann zur Vorwärmung des Trinkwasser im Boiler 2 und/oder für die Heizung ausgenutzt werden.

Im obersten Wärmetauscher 5 zur Trinkwasserheizung kann gegebenenfalls ein elektrischer Heizstab od.dgl. angeordnet sein, um gegebenenfalls kurzfristig größere Wärmemengen bieten zu können.

Abweichend von der dargestellten Ausführung kann die Brennkammer 10 gegebenenfalls nicht vorhanden sein, wenn ein separater Heizkessel vorhanden ist, der über einen Wasserkreislauf mit dem Speicherwasser des Speichers 1 in Wärmeaustausch steht. Dabei kann vom Ofen kommendes Heißwasser von oben in den Speicher 1 eingeleitet werden, aus dem dann von unten relativ kaltes Wasser zum Ofen abgeführt wird. Statt dessen ist es auch möglich, vom Ofen kommendes Heiß- bzw. Warmwasser etwa in Höhe der Vorlaufleitung 12 in den Speicher 1 einzuleiten und kälteres Wasser aus dem Speicher etwa in Höhe der Rücklaufleitung 11 zum Ofen hin abzuführen.

Um die Wärme des Wärmetauschers 8 besonders wirksam auf den Boiler 2 übertragen zu können, können über diesen Wärmetauscher 8 Leitbleche angeordnet sein, die vom Wärmetauscher 8 erzeugtes, aufsteigendes Warmwasser an der Wandung des Boilers entlangleiten.

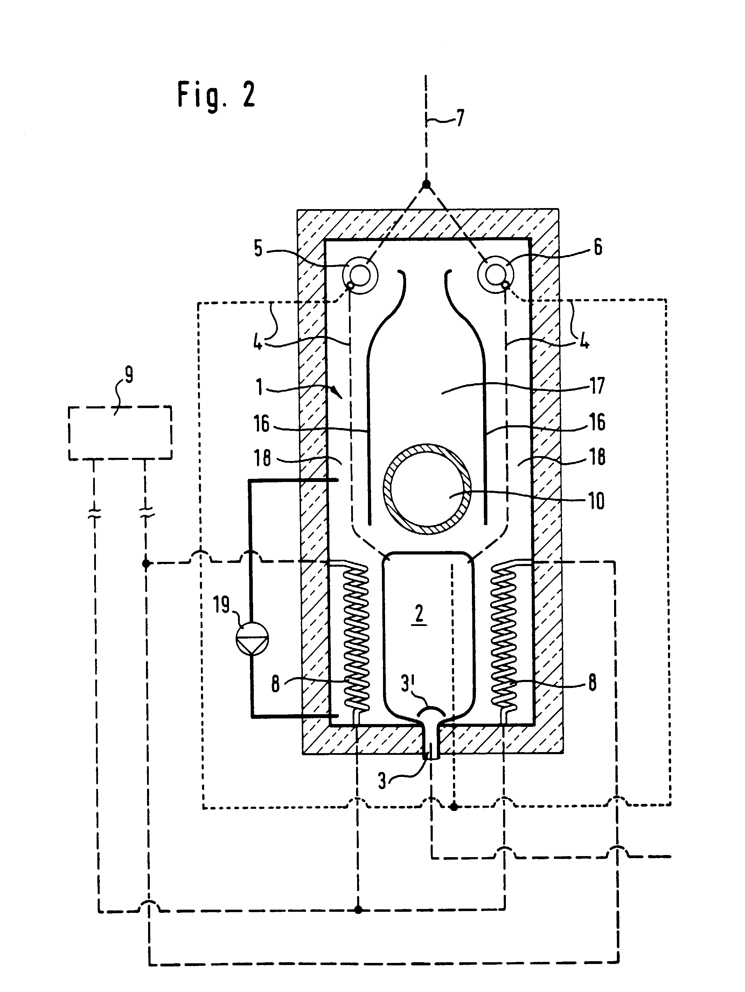

Bei dem in Fig. 2 dargestellten Schnittbild der Heizungsanlage erstreckt sich eine vertikale Schnittebene quer zur Schnittebene der Fig. 1, wo die Schnittebene die Vorder- sowie Rückseite des Speichers 1 durchgesetzt.

Die Ausführungsform nach Fig. 2 unterscheidet sich von der vorangehend anhand der Fig. 1 beschriebenen Ausführungsform zunächst dadurch, daß der Trinkwasserboiler 2 mit seiner Unterseite extrem tief im Wärmespeicher 1 angeordnet ist und der Einlaß 3 von unten in den Trinkwasserboiler 2 mündet. Dabei besitzt der Einlaß 3 einen besonders großen Querschnitt; außerdem bildet er an der Unterseite des Trinkwasserboilers 2 vorzugsweise einen nach oben geöffneten Trichter. Damit wird die Möglichkeit geboten, den Trinkwasserboiler 2 bei Bedarf nach Abtrennen der mit dem Einlaß 3 verbundenen Einlaßleitung vom Einlaß 3 aus zu reinigen. Der Einlaß 3 bildet also auch eine Reinigungsöffnung.

Um beim Einströmen von Kaltwasser in den Boiler 2 zu vermeiden, daß die gegebenenfalls vorhandenen Wasserschichten mit unterschiedlicher Temperatur durchmischt werden, ist über dem Einlaß 3 im Boiler 2 eine Abdeckung 3' angeordnet, die die Form einer glockenartigen Haube haben kann.

Im Beispiel der Fig. 2 sind seitlich neben dem Trinkwasserboiler 2 im Wärmespeicher 1 zwei parallel geschaltete Wärmetauscher 8 angeordnet, über die die Wärme des in Fig. 2 nicht dargestellten Sonnenkollektors 9 oder einer ähnlichen Wärmequelle in den Wärmespeicher 1 eingeführt wird. Die Wärmetauscher 8 werden von dem vom Sonnenkollektor 9 od.dgl. kommenden Wärmeträgermedium vorzugsweise von oben nach unten durchströmt, so daß die Wärmetauscher 8 in ihren oberen Bereichen wärmer als an ihren unteren Bereichen sind und der Temperaturgradient an den Wärmetauschern 8 dem Temperaturgradienten im Wärmespeicher 1 ähnelt. Die Wärmetauscher 8 können den Boiler 2 jeweils bogenförmig umschließen. Alternativ ist es auch möglich, einen einzigen Wärmetauscher 8 anzuordnen, welcher den Boiler 2 zweckmäßigerweise rundum umschließen sollte.

Vom oberen Bereich des Boilers 2 gehen eine oder mehrere Leitungen 4 zu den Wärmetauschern 5 und 6 ab. Diese Leitungen können auf kurzem Weg "direkt" nach oben zu den Wärmetauschern 5 und 6 verlaufen (strichliert dargestellt). Statt dessen kann die Leitung 4 vom oberen Bereich des Boilers 2 zunächst nach unten verlaufen und dann zu den Wärmetauschern 5 und 6 aufsteigen (punktiert dargestellt).

Oberhalb der Brennkammer 10 ist im Wärmespeicher 1 durch Leitbleche ein kaminartiger Schacht 17 ausgebildet, welcher sowohl nach unten als auch nach oben offen ist, wobei sich die Leitbleche 16 an ihren unteren Enden bis in Zonen des Wärmespeichers 1 seitlich der Brennkammer 10 erstrecken, von dieser jedoch einen gewissen Abstand haben, und wobei sich der Schacht 17 nach oben trichterartig verengt. Die obere Öffnung des Schachtes 17 ist von der Oberseite des Wärmespeichers 1 beabstandet und zwischen den seitlich der oberen Öffnung des Schachtes 17 angeordneten Wärmetauschern 5 und 6 angeordnet. Die Wärmetauscher 5 und 6 sind im Beispiel der Fig. 2 untereinander parallel geschaltet in Reihe mit dem Trinkwasserboiler 2 verbunden.

Unterhalb der Wärmetauscher 5 und 6 werden durch die Leitbleche 16 zwei seitlich des Schachtes 17 verbleibende Schächte 18 gebildet, welche gegebenenfalls auch einen einzigen, den Schacht 17 ringförmig umgebenenden Schacht bilden können.

Außerdem kann gemäß Fig. 2 noch eine Umwälzpumpe 19 vorgesehen sein, mit der sich Wärmespeichermedium (in der Regel Wasser) aus oberen Bereichen des Wärmespeichers 1, hier aus einem der Schächte 18, in einen unteren Bereich des Wärmespeichers 1 zwangsweise einführen läßt.

Beim Heizbetrieb der Brennkammer 10 steigt innerhalb des Schachtes 17 erhitztes Wasser bzw. Trägermedium auf und strömt von der oberen Öffnung des Schachtes 17 seitwärts über die Wärmetauscher 5 und 6, mit denen dann kurzfristig bei entsprechendem Bedarf große durchlaufende Trinkwassermengen erhitzt werden können. Aufgrund von Temperaturdifferenzen bildet sich im Wasser bzw. Wärmespeichermedium des Wärmespeichers 1 beim Betrieb der Brennkammer eine Konvektionsströmung, d.h. das aus dem Schacht 17 aufsteigende Wasser bzw. Medium sinkt in den Schächten 18 nach unten und gelangt dann wieder an der Brennkammer 10 vorbei durch den Schacht 17 nach oben.

Die Abwärtsströmung in den Schächten 18 ist besonders stark, wenn erhitztes Trinkwasser aus den Wärmetauschern 5 und 6 abgezapft wird, weil dann aus dem Wasser des Speichers 1 große Wärmemengen zum Aufheizen des in die Wärmetauscher 5 und 6 nachströmenden kälteren Trinkwassers aus dem Boiler 2 entnommen werden und dementsprechend das an den Wärmetauschern 5 und 6 vorbeiströmende Speicherwasser stärker abgekühlt wird.

Mittels der Umwälzpumpe 19 kann gegebenenfalls auch in untere Bereiche des Wärmespeichers 1 vergleichsweise heißes Wasser bzw. Wärmespeichermedium eingebracht werden. In diesem Falle werden in der Regel die Verbindungsleitungen zwischen den Wärmetauschern 8 und dem Solarkollektor 9 geschlossen, um bei geringem Anfall von Solarenergie Wärmeverluste zu vermeiden.

Ähnlich wie in Fig. 1 kann auch bei der Ausführungsform nach Fig. 2 vorgesehen sein, die Wärme der Abgase aus der Brennkammer 10 auszunutzen. Die dazu vorgesehenen Elemente - insbesondere Wärmetauscher 13 sowie zugehörige Leitungen 14 und 15 - sind in Fig. 2 nicht dargestellt.

Da die unteren Öffnungen der Schächte 18 senkrecht über den Wärmetauschern 8, welche vorzugsweise als vertikale Platten- oder Gittereinheiten ausgebildet sind, angeordnet sind, kann bei ruhendem Brennerbetrieb und starker Erwärmung der Wärmetauscher 8, etwa wenn die Solarkollektoren 9 an sonnigen Sommertagen große Wärmemengen bei hoher Temperatur liefern, von den Wärmetauschern 8 im Wärmespeicher 1 erwärmtes Wasser in größerer Menge durch die Schächte 18 zu den Wärmetauschern 5 und 6 aufsteigen und durch den Schacht 17 in Richtung der Wärmetauscher 8 absinken, von denen das Speicherwasser dann erneut erhitzt wird, so daß es wiederum in die Schächte 18 aufsteigt. Es ergibt sich bei dieser Betriebsweise eine Konvektionsströmung im Speicher 1, welche gegenüber der Konvektionsströmung bei Brennerbetrieb den umgekehrten Verlauf - d.h. aufsteigende Strömung in den Schächten 18 und Abwärtsströmung im Schacht 17 - aufweist.

## Patentansprüche

1. Multivalente Heizungsanlage mit einem mit Wasser als Wärmespeichermedium gefüllten Wärmespeicher (1), welcher über Vor- und Rücklaufleitungen (12,11) im Kreislauf mit Heizkörpern verbunden bzw. verbindbar ist und Wärme aus unterschiedlichen Wärmequellen aufzunehmen vermag, mindestens einem im oberen Bereich des Wärmespeichers (1) angeordneten oberen Durchflußwärmetauscher (5,6), der in Reihe mit einem im unteren Bereich des Wärmespeichers (1) zur Vorwärmung des Trinkwassers vorgesehenen unteren Durchflußwärmetauschers (2) angeordnet ist, und einer im Wärmespeicher (1) zwischen dem unteren Durchflußwärmetauscher (2) und dem oberen Durchflußwärmetauscher (5,6) angeordneten starke Wärmequelle, insbesondere einer Brennkammer (10) einer Gas- oder Ölheizung o. dgl., zur Erhitzung des Speicherwassers,
dadurch gekennzeichnet,
daß die starke Wärmequelle an einer unteren Öffnung eines im Wärmespeicher (1) angeordneten Schachtes (17) angeordnet ist, dessen obere Öffnung mit der oberen Öffnung mindestens eines weiteren Schachtes (18) kommuniziert, wobei die untere Öffnung des weiteren Schachtes (18) neben der starken Wärmequelle im Wärmespeicher (1) angeordnet ist und vorzugsweise senkrecht über einem Wärmetauscher (8) liegt, der mit einer zusätzlichen Wärmequelle (9) verbunden ist, und daß der bzw. die oberen Durchflußwärmetauscher (5,6) im oberen Verbindungsbereich der Schächte (17,18) im Wärmespeicher (1) angeordnet sind.

2. Heizungsanlage nach Anspruch 1,
dadurch gekennzeichnet,
daß der untere Durchflußwärmetauscher als Boiler (2) ausgebildet ist.

3. Heizungsanlage nach Anspruch 1 oder 2,
dadurch gekennzeichnet,
daß die Vorlaufleitung (12) unterhalb des oberen Durchflußwärmetauschers (5,6) vom Wärmespeicher (1) abzweigt.

4. Heizungsanlage nach einem der Ansprüche 1 bis 3,
dadurch gekennzeichnet,
daß die Rücklaufleitung (11) oberhalb des unteren Durchflußwärmetauschers bzw. Boilers (2) angeschlossen bzw. wahlweise oberhalb oder unterhalb des unteren Durchflußwärmetauschers bzw. Boilers (2) anschließbar ist.

5. Heizungsanlage nach einem der Ansprüche 1 bis 4,
dadurch gekennzeichnet,
daß unterhalb des unteren Durchflußwärmetauschers bzw. Boilers (2) ein flacher Wärmetauscher (8) angeordnet ist, welcher mit einem Kollektor (9) für Solarenergie wirkverbunden ist.

6. Heizungsanlage nach einem der Ansprüche 1 bis 5,
dadurch gekennzeichnet,
daß der Wärmespeicher (1) zwischen unterem Durchflußwärmetauscher bzw. Boiler (2) und dem oberen Durchflußwärmetauscher (5,6) Anschlüsse zur Einspeisung von Warmwasser aus verschiedenen Wärmequellen besitzt.

7. Heizungsanlage nach einem der Ansprüche 1 bis 6,
dadurch gekennzeichnet,
daß ein außerhalb des Wärmespeichers (1) angeordneter Wärmetauscher (13) zur Aufnahme von Wärme bei geringer Temperatur innerhalb eines Wasserkreislaufes angeordnet ist, welcher durch den vom unteren Durchflußwärmetauscher bzw. Boiler (2) eingenommenen unteren Bereich des Wärmespeichers (1) führt und insbesondere von einem Bereich an der Unterseite des unteren Durchflußwärmetauschers bzw. Boilers (2) über den Wärmetauscher (13) und von dort zu einem höheren Bereich des Wärmespeichers (1), vorzugsweise dicht oberhalb des unteren Durchflußwärmetauschers bzw. Boilers (2), verläuft.

8. Heizungsanlage nach einem der Ansprüche 1 bis 7,
dadurch gekennzeichnet,
daß der obere Durchflußwärmetauscher (5,6) bzw. ein Teil desselben im Wirkbereich einer Elektroheizung bzw. eines elektrischen Heizstabes angeordnet ist.

9. Heizungsanlage nach einem der Ansprüche 1 bis 8,
dadurch gekennzeichnet,
daß eine Pumpe (19) vorhanden ist, mittels der Wasser aus einem vertikal höheren Bereich des Wärmespeichers (1) in einen vertikal tiefen Bereich desselben einführbar ist.

## Claims

1. Multivalent heating plant comprising a heat reservoir (1) filled with water as a heat storage medium which is connected or connectable via outflow and return flow lines (12, 11) in a circuit with radiators and which is able to take up heat from different heat sources, at least one upper through-flow heat exchanger (5, 6) arranged in the upper region of the heat reservoir (1) and arranged in series with a lower through-flow heat exchanger (2) arranged in the lower region of the heat reservoir (1) for the pre-warming of the drinking water, and a powerful heat source, in particular a combustion chamber (10) of a gas burner or oil burner or the like, arranged in the heat reservoir (1) between the lower through-flow heat exchanger (2) and the upper through-flow heat exchanger (5, 6) for the heating of the reservoir water, characterised in that the powerful heat source is arranged at a lower opening of a shaft (17) arranged in the heat reservoir (1), with the upper opening of the shaft communicating with the upper opening of at least one further shaft (18), and with the lower opening of the further shaft (18) being arranged alongside the powerful heat source in the heat reservoir (1) and preferably lying vertically above a heat exchanger (8) which is connected to an additional heat source (9); and in that the upper through-flow heat exchanger or heat exchangers (5, 6) are arranged in the upper connection area of the shafts (17, 18) in the heat reservoir (1).

2. Heating plant in accordance with claim 1, characterised in that the lower through-flow heat exchanger is formed as a boiler (2).

3. Heating plant in accordance with claim 1 or claim 2, characterised in that the outflow line (12) branches off from the heat reservoir (1) beneath the upper through-flow heat exchanger (5, 6).

4. Heating plant in accordance with one of the claims 1 to 3, characterised in that the return flow line (11) is connected above the lower through-flow heat exchanger or boiler (2) or is selectively connectable above or below the lower through-flow heat exchanger or the boiler (2).

5. Heating plant in accordance with one of the claims 1 to 4, characterised in that a flat heat exchanger (8) is arranged beneath the lower through-flow heat exchanger or boiler (2) and is functionally connected to a collector (9) for solar energy.

6. Heating plant in accordance with one of the claims 1 to 5, characterised in that the heat reservoir (1) has connections between the lower through-flow heat exchanger or boiler (2) and the upper heat exchanger (5, 6) for feeding in warm water from various heat sources.

7. Heating plant in accordance with one of the claims 1 to 6, characterised in that a heat exchanger (13) is arranged outside of the heat reservoir (1) to pick up heat at a low temperature within a water circuit which leads through the lower region of the heat reservoir (1) used by the lower through-flow heat exchanger or boiler (2), and in particular from a region at the lower side of the lower through-flow heat exchanger or boiler (2), via the heat exchanger (13) and from there to a higher region of the heat reservoir (1), preferably closely above the lower through-flow heat exchanger or boiler (2).

8. Heating plant in accordance with one of the claims 1 to 7, characterised in that the upper through-flow heat exchanger (5, 6) or a part of the latter is arranged in the zone of action of an electrical heater or electrical heating element.

9. Heating plant in accordance with one of the claims 1 to 8, characterised in that a pump (19) is present by means of which the water can be introduced from a vertically higher region of the heat reservoir (1) into a vertically lower region of the same.

## Revendications

1. Installation de chauffage polyvalente comprenant un accumulateur de chaleur (1) qui est empli d'eau formant un fluide d'accumulation de chaleur et qui est relié ou peut être relié par des canalisations d'aller et de retour (12, 11) en un circuit à des corps de chauffe et qui est capable d'absorber de la chaleur provenant de différentes sources de chaleur, au moins un échangeur de chaleur supérieur à circulation (5, 6) qui est disposé dans une région supérieure de l'accumulateur de chaleur (1) et qui est monté en série avec un échangeur inférieur de chaleur à circulation (2) prévu dans une région inférieure de l'accumulateur de chaleur (1) pour le chauffage initial de l'eau potable, ainsi qu'une forte source de chaleur, en particulier une chambre de combustion (10) d'un chauffage à gaz ou à mazout ou analogue, destinée au chauffage de l'eau de l'accumulateur et qui est disposée dans l'accumulateur de chaleur (1) entre l'échangeur inférieur de chaleur à circulation (2) et l'échangeur supérieur de chaleur à circulation (5, 6),
caractérisée
en ce que la forte source de chaleur est disposée à une ouverture inférieure d'une colonne (17) disposée dans l'accumulateur de chaleur (1) et dont l'ouverture supérieure communique avec l'ouverture supérieure d'au moins une autre colonne (18), l'ouverture inférieure de l'autre colonne (18) étant disposée dans l'accumulateur de chaleur (1) à côté de la forte source de chaleur et étant située de préférence verticalement au-dessus d'un échangeur de chaleur (8) qui est raccordé à une source auxiliaire de chaleur (9) et en ce que le ou les échangeur(s) supérieur(s) de chaleur à circulation (5, 6) est ou sont disposé(s) à l'intérieur de l'accumulateur de chaleur (1) dans la région supérieure de jonction des colonnes (17, 18).

2. Installation de chauffage selon la revendication 1,
caractérisée
en ce que l'échangeur inférieur de chaleur à circulation est conformé en ballon (2).

3. Installation de chauffage selon la revendication 1 ou 2,
caractérisée
en ce que la canalisation d'aller (12) part de l'accumulateur de chaleur (1) au-dessous de l'échangeur supérieur de chaleur à circulation (5, 6).

4. Installation de chauffage selon l'une des revendications 1 à 3,
caractérisée
en ce que la canalisation de retour (11) est raccordée au-dessus de l'échangeur de chaleur inférieur à circulation ou du ballon (2) ou peut être raccordée sélectivement au-dessus ou au-dessous de l'échangeur inférieur de chaleur à circulation ou du ballon (2).

5. Installation de chauffage selon l'une des revendications 1 à 4.
caractérisée
en ce qu'un échangeur de chaleur plat (8), qui est en relation fonctionnelle avec un capteur (9) d'énergie solaire, est disposé au-dessous de l'échangeur inférieur de chaleur à circulation ou du ballon (2).

6. Installation de chauffage selon l'une des revendications 1 à 5,
caractérisée
en ce que l'accumulateur de chaleur (1) comporte des raccords d'arrivée d'eau chaude qui proviennent de sources différentes de chaleur et qui sont placés entre l'échangeur inférieur de chaleur à circulation ou le ballon (2) et l'échangeur supérieur de chaleur à circulation (5. 6).

7. Installation de chauffage selon l'une des revendications 1 à 6,
caractérisée
en ce qu'un échangeur de chaleur (13) disposé à l'extérieur de l'accumulateur de chaleur (1) et destiné à absorber de la chaleur à basse température est disposé à l'intérieur d'un circuit d'eau qui passe par la région inférieure de l'accumulateur de chaleur (1) occupée par l'échangeur de chaleur inférieur à circulation ou le ballon (2) et qui va en particulier d'une région située sur le côté inférieur de l'échangeur inférieur de chaleur à circulation ou du ballon (2) sur l'échangeur de chaleur (13) et de là à une région supérieure de l'accumulateur de chaleur (1), de préférence étroitement au-dessus de l'échangeur inférieur de chaleur à circulation ou du ballon (2).

8. Installation de chauffage selon l'une des revendications 1 à 7,
caractérisée
en ce que l'échangeur supérieur de chaleur à circulation (5, 6) ou une partie de celui-ci est disposé dans la zone d'action d'un chauffage électrique ou d'une cartouche électrique de chauffage.

9. Installation de chauffage selon l'une des revendications 1 à 8,
caractérisée
en ce qu'elle comprend une pompe (19) qui permet d'introduire l'eau d'une région verticalement supérieure de l'accumulateur de chaleur (1) dans une région verticalement inférieure de ce dernier.
